# FASCICULE DE BREVET EUROPEEN

(11) **EP 4 307 053 B1**
(45) Date de publication et mention de la délivrance du brevet: **25.02.2026**
(21) Numéro de dépôt: 22184754.4
(22) Date de dépôt: 13.07.2022
(51) Int. Cl.: G04B 19/12, A44C 27/00, G04D 3/00, G04B 19/28, G04B 29/02, G04B 5/16

(54) **PROCÉDÉ DE FABRICATION D'UN COMPOSANT HORLOGER**
VERFAHREN ZUR HERSTELLUNG EINER UHRENKOMPONENTE
METHOD FOR MANUFACTURING A CLOCK COMPONENT

(43) Date de publication de la demande: 17.01.2024
(73) Titulaire: The Swatch Group Research and Development Ltd, 2074 Marin (CH)
(72) Inventeur: OBERSON, Loïc, 1110 Morges (CH); NETUSCHILL, Alexandre, 2414 Le Cerneux-Péquignot (CH); LAUPER, Stéphane, 2016 Cortaillod (CH); KISSLING, Gregory, 2520 La Neuveville (CH); BOURBAN, Stewes, 1589 Chabrey (CH); SAURET, Pierre, 2208 Les Hauts-Geneveys (CH)
(74) Mandataire: ICB SA

(56) Documents cités:
- EP-B1- 0 294 661
- CH-A2- 707 351
- JP-U- S5 726 078

## Description

### Domaine technique de l'invention

La présente invention concerne un procédé de fabrication d'un cadran horloger.

### Arrière-plan technologique de l'invention

De nombreux procédés pour la fabrication et de décoration en relief sur une surface d'une pièce mécanique telle qu'un cadran de montre sont connus dans l'état de la technique. Parmi tous ces procédés connus, un certain nombre d'entre eux consistent à fabriquer les éléments de décor séparément de la pièce mécanique à décorer, puis à fixer ces éléments de décor sur la pièce mécanique à laquelle ils sont destinés.

Un autre procédé de décoration d'une pièce mécanique telle qu'un cadran est connu par la demande de brevet européen EP 2 370 865 A1 au nom de The Swatch Group Research and Development Ltd. Ce procédé de décoration consiste à :
- se munir de la pièce mécanique à décorer ;
- réaliser un masque du type d'une plaque dont l'épaisseur est au moins égale à l'épaisseur souhaitée des éléments de décor et dans laquelle sont usinées des ouvertures dont les contours correspondent à la forme des éléments de décors recherchés ;
- positionner le masque sur la surface à décorer de la pièce mécanique, de façon que les ouvertures du masque coïncident avec les emplacements de la pièce mécanique destinés à recevoir les éléments de décor ;
- placer ladite au moins une ouverture du masque (4) contre l'endroit à décorer afin de former au moins un moule ;
- remplir par injection ledit au moins un moule avec un matériau métallique porté à une température au moins supérieure à sa température de transition vitreuse Tg et ensuite refroidi de sorte à donner à ce métal une structure amorphe pour former l'élément ;
- retirer le masque pour révéler les éléments de décor à la surface de la pièce mécanique décorée.

Un avantage de ce procédé de décoration réside dans sa relative simplicité de mise en oeuvre. En effet, alors que dans le cas de nombreux procédés de décoration, les éléments de décor sont réalisés séparément de la pièce mécanique à décorer, puis seulement ensuite fixés sur cette pièce mécanique, dans le cas où l'on utilise un masque, les éléments de décor sont directement réalisés et fixés sur la pièce mécanique à décorer dans la même étape du procédé, ce qui permet de réaliser des gains de temps.

Un inconvénient du procédé de décoration au moyen de masques posés à la surface de la pièce mécanique à décorer peut néanmoins être vu dans le fait qu'on ne peut exclure le risque que le masque ne soit pas intimement en contact avec la surface à décorer et qu'au moment du remplissage des différents moules, le matériau de remplissage fuit quelque peu sur la surface de la pièce mécanique, ce qui oblige à mettre certaines de ces pièces mécaniques au rebut. Ceci est problématique en particulier dans le cas où l'on veut décorer des cadrans pour pièces d'horlogerie, car de tels cadrans sont des pièces mécaniques coûteuses.

Encore un autre inconvénient d'un tel procédé de décoration est que les formes géométriques complexes pour décorer le cadran sont difficilement réalisables et nécessitent généralement un travail manuel très couteux. Le document EP 0 294 661 B1 montre un procédé de fabrication d'un cadran de montre revêtu d'un décor en mosaïque.

### Résumé de l'invention

La présente invention a pour but de remédier aux problèmes mentionnés ci-dessus ainsi qu'à d'autres encore en proposant un procédé de fabrication d'un cadran de montre qui évite notamment que les éléments de décors soient reportés à la surface du cadran. La présente invention a également pour but de procurer un procédé de fabrication de cadran auquel les éléments de décor sont intégrés directement dans le corps du cadran et forment un élément monolithique.

A cet effet, la présente invention concerne un procédé de fabrication d'un cadran horloger selon la revendication 1 annexée.

Selon des formes spéciales d'exécution, le procédé de fabrication d'un composant horloger selon l'invention se caractérise en ce que:
- le matériau de remplissage est un métal amorphe ou un métal partiellement amorphe ;
- le métal amorphe ou partiellement amorphe est un alliage de platine, un alliage de palladium ou bien un alliage de zirconium;
- le matériau du composant horloger est choisi parmi des matériaux ayant une température de fusion supérieure à la Tg du métal amorphe (métaux, céramiques, verres, saphir, diamant, nacre, silicium, pierres précieuses et semi-précieuses, etc...)
- le composant horloger réassemblé est soumis à l'une au moins des opérations de finition suivantes : sablage, brossage, satinage, polissage, soleillage ou mattification laser ;
- le composant horloger est choisi parmi : une lunette, un fond, un pont, une platine, une masse oscillante ou bien encore un article de bijouterie.

L'invention concerne également un cadran horloger obtenu par la mise en œuvre d'un procédé de fabrication conforme à l'invention.

### Brève description des figures

D'autres caractéristiques et avantages de la présente invention ressortiront plus clairement de la description détaillée qui suit d'un exemple de mise en œuvre du procédé selon l'invention, cet exemple étant donné à titre purement illustratif et non limitatif seulement en liaison avec le dessin annexé sur lequel :
- la figure 1 représente les différentes étapes du procédé de fabrication ;
- la figure 2 est une vue de dessus d'un cadran de montre obtenu par la mise en oeuvre du procédé de fabrication selon l'invention.

### Description détaillée d'un mode de réalisation de l'invention

Conformément à l'invention, on commence par se munir d'un cadran horloger pour l'étape a). Bien entendu, et de façon non revendiquée, le composant horloger fabriqué peut être de tout type comme une lunette, un fond, un pont, une platine, une masse oscillante ou bien encore un article de bijouterie. La seule contrainte qui pèse sur ce composant horloger est qu'il doit être réalisé dans un matériau dont les propriétés mécaniques ne sont pas modifiées dans la gamme de températures mises en jeu par le procédé de l'invention. En d'autres termes, le composant horloger ne doit pas se déformer, ramollir, voire fondre durant les opérations de décoration conformes à l'invention.

Une fois muni du cadran de montre 1, ce dernier est brisé en plusieurs morceaux 10 au cours de l'étape suivante b). Cette opération peut être effectuée de manière totalement aléatoire pour obtenir des motifs uniques par la suite, ou de manière contrôlée pour obtenir des motifs prédéterminés.

Selon une variante de l'invention, des morceaux déjà cassés tels que des déchets ou des rebuts peuvent être utilisés en lieu et place du composant horloger préalablement brisé.

Le matériau utilisé pour le cadran 1 peut être un matériau métallique comme l'acier, le laiton, l'aluminium ou le titane mais il peut également être un matériau dit fragile. On entend par matériau fragile un matériau qui n'a pas de déformation plastique exploitable comme par exemple le quartz, le rubis, le saphir, le verre, le silicium, le diamant, le graphite, le carbone ou une céramique telle que le nitrure de silicium et le carbure de silicium ou un composite de type cermet. On comprend alors qu'une pièce réalisée dans un tel matériau est très fragile et peut être brisée facilement.

Le matériau formant le composant horloger 1 est choisi parmi des matériaux ayant une température de fusion supérieure à la Tg du métal amorphe utilisé ultérieurement dans le procédé.

Au cours de l'étape c), il convient de transférer sur un support 2, tel qu'un tassot ou une embase, les morceaux 10 du cadran 1 et créer un motif souhaité à réassembler, le motif présentant des interstices 11 entre les différents morceaux. Les morceaux 10 du cadran sont dimensionnés et positionnés les uns par rapport aux autres de sorte qu'au moins un interstice 11 apparait. Les interstices 11 sont utilisés pour qu'un autre matériau puisse s'y insérer, ce dernier étant utilisé pour faire office d'élément de liaison et de décoration entre les morceaux du cadran 1.

Une fois les morceaux 10 placés sur le support 2, ce dernier est transféré dans un moule adapté au façonnage à chaud et une préforme métallique 3 est placée sur les morceaux de cadran (étape d).

Selon l'invention, le matériau utilisé pour la préforme 3 et faisant office d'élément de liaison entre les morceaux 10 du cadran, est un matériau métallique amorphe ou partiellement amorphe.

On comprendra par matériau partiellement amorphe que le matériau est apte à se solidifier au moins partiellement en phase amorphe, c'est-à-dire qu'il est soumis à une montée en température au-dessus de sa température de fusion lui permettant de perdre localement toute structure cristalline, ladite montée étant suivie d'un refroidissement à une température inférieure à sa température de transition vitreuse lui permettant de devenir au moins partiellement amorphe. Ce matériau peut alors être un alliage métallique.

Selon une variante de l'invention, la préforme 3 est fabriquée en compactant un mélange de poudres (poudre métallique déjà amorphe par exemple) en utilisant par exemple le pressage ou l'extrusion à chaud entre la température de transition vitreuse Tg et la température de cristallisation Tx.

Lors de l'étape e) suivante, le moule comprenant l'embase 2, les morceaux 10 de cadran et la préforme 3 est chauffé à une température supérieure à la température de transition vitreuse de la préforme 3 puis une force F est appliquée sur la préforme 3 via un piston 4 pour remplir les interstices 11 et obtenir un cadran réassemblé 1'. Cette étape de chauffage consiste à chauffer l'ensemble à une température comprise entre la température de transition vitreuse Tg et la température de cristallisation Tx de la préforme. A cette température, les métaux amorphes ont une viscosité qui diminue fortement, la diminution de la viscosité étant dépendante de la température.

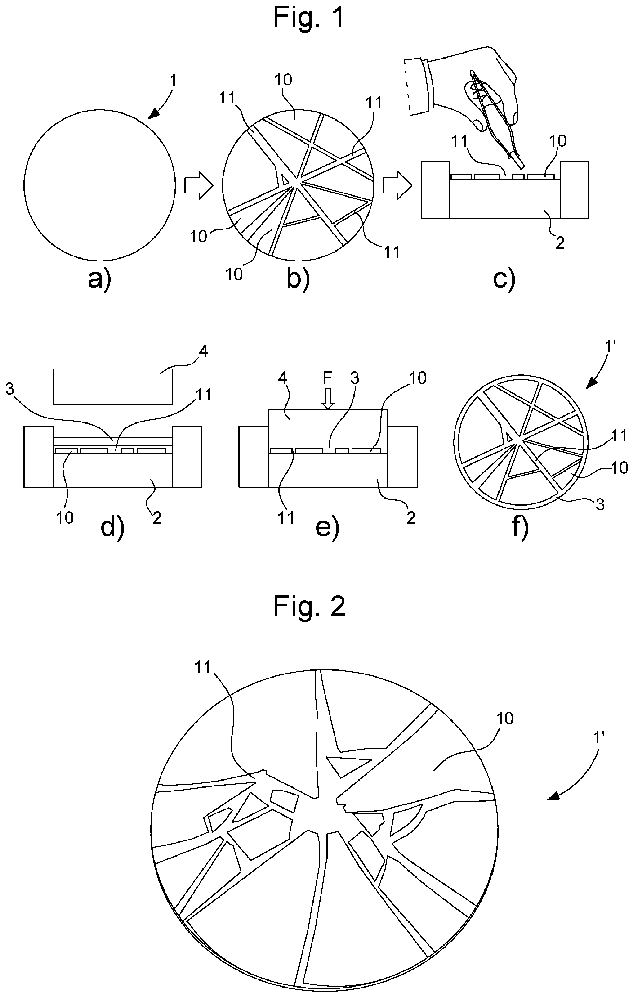

Une fois que la préforme 3 a atteint la viscosité souhaitée, cette dernière est pressée de manière à remplir les interstices 11 entre les morceaux 10 de cadran 1 comme visible à la figure 2. Bien évidemment, la pression exercée sur la préforme 3 dépend du métal ou de l'alliage utilisée et de sa température de transition vitreuse Tg.

Une fois que l'expansion de la préforme 3 dans les interstices 11 est réalisée et que les morceaux 10 de cadran sont liés entre eux dans leur position définitive avec la préforme 3 remplissant les interstices 11, une étape de refroidissement est opérée. Cette étape de refroidissement est effectuée pour figer la préforme 3 et former un cadran réassemblé 1' présentant une ténacité accrue et un motif décoratif unique.

Lors d'une dernière étape le cadran réassemblé 1' est soumis à l'une au moins des opérations de finition suivantes : sablage, brossage, satinage ou polissage. Le cadran réassemblé 1' peut également être découpé au dimensions finales souhaitées ou repris au niveau de la face arrière pour ajuster l'épaisseur de ce dernier.

Il va de soi que la présente invention n'est pas limitée aux modes de réalisation qui viennent d'être décrits, et que diverses modifications et variantes simples peuvent être envisagées par l'homme du métier sans sortir du cadre de l'invention tel que défini par les revendications annexées.

## Revendications

1. Procédé de fabrication d'un cadran horloger comprenant la succession des
étapes suivantes :
- se munir d'un cadran (1) ;
- briser le cadran (1) en plusieurs morceaux (10) ou utiliser des morceaux d'un cadran déjà brisé ;
- déposer les morceaux (10) sur un support (2) et créer un motif souhaité à réassembler, le motif présentant des interstices (1) entre les différents morceaux (10) du cadran (1) ;
- transférer le support (2) dans un moule adapté au façonnage à chaud et placer une préforme (3) sur les morceaux (10) du cadran ;
- chauffer le tout à une température supérieure à la température de transition vitreuse de la préforme (3) et appliquer une force sur la préforme pour remplir les interstices (11) et obtenir un cadran réassemblé (1') ;
- refroidir le tout en dessous de la température de transition vitreuse de la préforme (3) pour former le cadran réassemblé (1') ;
- récupérer le cadran réassemblé (1') et l'usiner aux dimensions souhaitées.

2. Procédé de fabrication selon la revendication 1, **caractérisé en ce que** la préforme (3) est réalisée en un métal amorphe ou un métal partiellement amorphe.

3. Procédé de fabrication selon la revendication 2, **caractérisé en ce que** le métal amorphe ou partiellement amorphe est un alliage de platine, un alliage de palladium un alliage de zirconium, un alliage d'or ou d'argent.

4. Procédé de fabrication selon la revendication 2, **caractérisé en ce que** le matériau formant le cadran (1) est choisi parmi des matériaux ayant une température de fusion supérieure à la Tg du métal amorphe tels que les métaux, céramiques, verres, saphir, diamant, nacre, silicium, pierres précieuses et semi-précieuses.

5. Procédé de fabrication selon l'une des revendications 1 à 4, **caractérisé en ce que** le cadran réassemblé (1') est soumis à l'une au moins des opérations de finition suivantes : sablage, brossage, soleillage, satinage polissage ou mattification laser.

6. Cadran horloger **caractérisé en ce qu'**il est obtenu par la mise en œuvre d'un procédé de fabrication selon les revendications 1 à 5.

## Patentansprüche

1. Verfahren zur Herstellung eines Ziffernblatts,
umfassend die Abfolge der folgenden Schritte:
- Bereitstellen eines Ziffernblatts (1);
- Zerbrechen des Ziffernblatts (1) in mehrere Ziffernblattstücke (10) oder Verwenden von Ziffernblattstücken eines bereits zerbrochenen Ziffernblatts;
- Anordnen der Ziffernblattstücke (10) auf einem Träger (2) und Erzeugen eines gewünschten, wieder zusammenzusetzenden Musters, wobei das Muster Zwischenräume (1) zwischen den verschiedenen Ziffernblattstücke (10) des Ziffernblatts (1) aufweist;
- Überführen des Trägers (2) in eine für das Heißumformen geeignete Form und Anordnen einer Vorform (3) auf den Ziffernblattstücken (10) des Ziffernblatts;
- Erwärmen des Ganzen auf eine Temperatur oberhalb der Glasübergangstemperatur der Vorform (3) und Aufbringen einer Kraft auf die Vorform, um die Zwischenräume (11) zu füllen und ein wieder zusammengebautes Ziffernblatt (1') zu erhalten;
- Abkühlen des Ganzen unterhalb der Glasübergangstemperatur der Vorform (3), um das wieder zusammengebaute Ziffernblatt (1') zu bilden;
- Entnehmen des wieder zusammengebauten Ziffernblatts (1') und spanende Bearbeitung auf die gewünschten Abmessungen.

2. Herstellungsverfahren nach Anspruch 1, **dadurch gekennzeichnet, dass** die Vorform (3) aus einem amorphen Metall oder einem teilweise amorphen Metall hergestellt ist.

3. Herstellungsverfahren nach Anspruch 2, **dadurch gekennzeichnet, dass** das amorphe oder teilweise amorphe Metall eine Platinlegierung, eine Palladiumlegierung, eine Zirkoniumlegierung, eine Goldlegierung oder eine Silberlegierung ist.

4. Herstellungsverfahren nach Anspruch 2, **dadurch gekennzeichnet, dass** das das Ziffernblatt (1) bildende Material aus Materialien mit einer Schmelztemperatur oberhalb der Tg des amorphen Metalls ausgewählt ist, wie Metalle, Keramiken, Gläser, Saphir, Diamant, Perlmutt, Silicium, Edelsteine und Halbedelsteine.

5. Herstellungsverfahren nach einem der Ansprüche 1 bis 4, **dadurch gekennzeichnet, dass** das wieder zusammengebaute Ziffernblatt (1') mindestens einem der folgenden Endbearbeitungsvorgänge unterzogen wird: Sandstrahlen, Bürsten, Sonnenschliff, Satinieren, Polieren oder Lasermattieren.

6. Ziffernblatt, **dadurch gekennzeichnet, dass** es
durch Ausführen eines Herstellungsverfahrens nach einem der Ansprüche 1 bis 5 hergestellt ist.

## Claims

1. Method for manufacturing a timepiece dial comprising the successive steps of:
- providing a dial (1);
- breaking the dial (1) into a plurality of pieces (10) or using the pieces of an already broken dial;
- depositing the pieces (10) on a support (2) and creating a desired pattern to be reassembled, the pattern having interstices (1) between the various pieces (10) of the dial (1);
- transferring the support (2) into a mould adapted by hot forming and placing a preform (3) on the pieces (10) of the dial ;
- heating the whole to a temperature higher than the vitreous transition temperature of the preform (3) and applying a force on the preform to fill the interstices (11) and obtain a reassembled dial (1');
- cooling the whole below the vitreous transition temperature of the preform (3) to form the reassembled dial (1');
- recovering the reassembled dial (1') and machining it to the required dimensions.

2. Manufacturing method according to claim 1, **characterised in that** the preform (3) is made of an amorphous metal or a partially amorphous metal.

3. Manufacturing method according to claim 2, **characterised in that** the amorphous or partially amorphous metal is a platinum alloy, a palladium alloy, a zirconium alloy, a gold or silver alloy.

4. Manufacturing method according to claim 2, **characterised in that** the material forming the dial (1) is selected from materials having a melting temperature higher than the Tg of the amorphous metals such as metals, ceramics, glass, sapphire, diamond, mother-of-pearl, silicon, precious and semi-precious stones.

5. Manufacturing method according to one of claims 1 to 4, **characterised in that** the reassembled dial (1') is subjected to one at least of the following finishing operations: sanding, brushing, sunray brushing, satin finishing, polishing or laser matte finishing.

6. Timepiece dial **characterised in that** it is obtained by implementing a manufacturing method according to claims 1 to 5.
